# DEMANDE DE BREVET EUROPEEN

(11) **EP 1 205 112 A1**
(43) Date de publication de la demande: **15.05.2002**
(21) Numéro de dépôt: 01402859.1
(22) Date de dépôt: 07.11.2001
(51) Int. Cl.: A23B 4/32, A23B 4/26

(54) **Baratte de traitement pour produits alimentaires tels que des viandes ou des poissons**

(30) Priorité: 14.11.2000 FR 0014620; 14.11.2000 FR 0014621; 15.11.2000 FR 0014731
(71) Demandeur: Armor Inox, F-56430 Mauron (FR)
(72) Inventeur: Dreano, Claude, 56430 Mauron (FR); Jagorel, Loic, 56430 Mauron Cedex (FR)
(74) Mandataire: Geismar, Thierry

(57) **Abrégé**

L'invention concerne une baratte (1) pour le traitement de produits alimentaires tels que des viandes ou des poissons, comprenant un tonneau (6), monté à rotation autour de son axe (7) et monté basculant autour d'un axe (11) de basculement perpendiculaire à l'axe (7) de rotation, et comprenant une porte (17) de fermeture de l'embouchure (15) du tonneau (6). La porte (17) est montée tournante sur une potence (18) pivotant autour d'un axe (19) de pivotement monté sur un bras (20) monté basculant par rapport audit axe (11) de basculement, l'axe de pivotement étant vertical lorsque le tonneau est en position haute de chargement.

## Description

La présente invention concerne une baratte pour le traitement de produits alimentaires tels que des viandes ou des poissons, et plus particulièrement une telle baratte comprenant un tonneau doté d'une embouchure, monté à rotation autour de son axe et monté basculant autour d'un axe de basculement sensiblement perpendiculaire à l'axe de rotation, et comprenant une porte de fermeture de l'embouchure du tonneau.

On connaît de telles barattes utilisées, par exemple, pour le saumurage des jambons, pour la décongélation des viandes ou pour l'enrobage cryogénique d'un certain nombre de produits alimentaires.

Les produits alimentaires sont placés dans le tonneau avec les additifs convenables, par exemple de la saumure, puis le tonneau est entraîné en rotation pendant une certaine durée pour assurer le malaxage des produits et la pénétration des additifs. Le barattage est ensuite interrompu et le tonneau est vidé des produits qu'il contient après ouverture de la porte.

Toutefois cette porte est lourde, malaisée à manoeuvrer, encombrante pendant les opérations de vidage et peut même gêner celles-ci pour la mise en place d'un récipient de collecte des produits vidés.

Dans les barattes connues, l'axe de rotation est généralement légèrement incliné vers le fond opposé à l'embouchure et vers le bas de manière à augmenter la capacité de chargement. En effet, il est essentiel que cette capacité soit maximale si l'on souhaite optimiser la rentabilité du dispositif. Or, cette capacité maximale est évidemment limitée par le niveau inférieur de l'embouchure.

Du fait de cette inclinaison de l'axe de rotation vers l'arrière, on est amené à placer à l'intérieur du tonneau une pale inclinée par rapport à l'axe, de manière à éviter l'accumulation des produits dans le fond du tonneau. La soudure de cette pale à la paroi du tonneau s'effectue par conséquent suivant une ellipse dans la partie cylindrique du tonneau, ce qui complique la réalisation du tonneau.
Les pales connues actuellement sont directement soudées à la paroi du tonneau. Il est donc formé, à la jonction entre la pale et la paroi du tonneau, deux dièdres rentrants. Ces dièdres présentent l'inconvénient de ne pouvoir être nettoyés commodément, ce qui peut présenter des risques sanitaires.

Par ailleurs, on prévoit aussi une hélice à l'intérieur de la partie tronconique du tonneau, immédiatement derrière l'embouchure, de manière à faciliter l'introduction des produits dans le tonneau en faisant tourner celui-ci dans un certain sens et à faciliter l'extraction des produits en fin de barattage en faisant tourner le tonneau dans l'autre sens. Cette hélice est une pièce relativement difficile à réaliser et augmente par conséquent le coût de la baratte.

Le nettoyage et le contrôle des barattes de ce type présentent en outre de grandes difficultés du fait de la présence de l'hélice derrière laquelle il est difficile d'accéder et de l'étroitesse de la porte liée aux impératifs de capacité de chargement comme cela a été mentionné ci-dessus.

Il existe également des barattes montées basculantes autour d'un axe généralement perpendiculaire à leur axe de rotation. Cet axe est situé sous le tonneau.

Les barattes de ce type présentent toutefois l'inconvénient de nécessiter un grand volume de débattement. Les bâtis de montage sont donc eux-mêmes de grande dimension.

La présente invention vise à pallier ces inconvénients.

Plus particulièrement, l'invention a pour but de fournir une baratte plus facile à manoeuvrer, à nettoyer et à contrôler et à vider que les barattes de l'état de la technique.

L'invention a également pour but de fournir une baratte qui, pour une capacité donnée, soit de coût réduit.

L'invention a également pour but de fournir une baratte dont l'accès, notamment en vue de son remplissage et de sa vidange, soit plus aisé.

A cet effet, l'invention a pour objet une baratte pour le traitement de produits alimentaires tels que des viandes ou des poissons, comprenant un tonneau doté d'une embouchure, monté à rotation autour de son axe et monté basculant autour d'un axe de basculement sensiblement perpendiculaire à l'axe de rotation et sensiblement dans le même plan, et comprenant une porte de fermeture de l'embouchure du tonneau, caractérisé par le fait que la porte est montée tournante sur une potence pivotant autour d'un axe de pivotement, ledit axe de pivotement étant prévu sur un bras monté basculant par rapport audit axe de basculement.

Ainsi, la porte et sa potence de maintien peuvent être entraînés dans le basculement du tonneau lorsque celui-ci est fermé pendant les opérations de barattage. Inversement, la potence permet le dégagement de la porte pour permettre le basculement du tonneau lorsque son embouchure est ouverte pendant les opérations de vidage. La manoeuvre de la porte nécessite un effort moins important que son soulèvement. Par ailleurs, la porte ouverte libère de la place devant et autour de l'embouchure, ce qui facilite le vidage de la baratte dans un récipient. L'axe de pivotement de la porte et l'axe de basculement sont situés à chacune des extrémités du bras, ce qui permet d'obtenir une structure simple, compacte et intégrée de la baratte.

Suivant une caractéristique, la baratte comprend un système apte à bloquer le basculement du bras par rapport à l'axe de basculement de la baratte, lorsque la porte est ouverte. Ainsi, la course de la porte est contrôlée facilement et la potence de la porte est maintenue en position, par exemple en position haute.

Suivant une caractéristique, l'axe de pivotement de la potence est sensiblement vertical lorsque la baratte est dans une position d'ouverture de porte et de verrouillage du basculement du bras, ce qui réduit encore davantage l'effort nécessaire pour manoeuvrer la porte.

Dans un mode de réalisation permettant de maintenir automatiquement sensiblement horizontale la course de pivotement de la porte, le système comporte un vérin compensateur entre le bras et un bâti fixe de support.

Dans un autre mode de réalisation, plus compact, le système comporte un verrou de bloquage entre le bras et un bâti fixe de support.

Suivant une caractéristique, le bras comporte un membre de liaison à l'axe de basculement et un membre de support de l'axe de pivotement, le membre de liaison étant sensiblement à angle droit avec le membre de support.

Pour éviter que la porte ouverte ne se déplace vers le tonneau, l'axe de pivotement est formé par un palier à au moins un coussinet apte à maintenir en position la potence par rapport au bras en position d'ouverture de la porte.

Afin de faciliter la rotation de la porte fermée avec le tonneau, un joint tournant est monté tournant sur la paroi de la porte suivant l'axe de rotation par rapport à une couronne de réception du joint tournant, fixée sur la potence.

Suivant une caractéristique, l'axe de basculement est sensiblement dans un même plan que l'axe de rotation et situé à proximité immédiate de l'embouchure.

Bien évidemment, un tel agencement peut être réalisé indépendamment des dispositions précédemment décrites.

Ainsi, le basculement du tonneau s'effectue en soulevant ou en abaissant son fond. Il en résulte un faible débattement vertical de l'embouchure facilitant l'installation de la baratte. Le fait que l'axe de basculement se trouve sensiblement dans le même plan que l'axe de rotation permet également d'optimiser le fonctionnement de la baratte. Ainsi la baratte a un taux de remplissage d'au moins 60 %.

Dans un mode de réalisation particulier, la baratte selon l'invention comprend une pale de malaxage s'étendant à l'intérieur du tonneau à partir de la paroi de ce dernier, ladite pale étant reliée à la paroi du tonneau sensiblement le long d'une génératrice de cette paroi.

Le barattage à l'aide de la baratte selon l'invention pouvant s'effectuer avec son axe de rotation sensiblement horizontal, il est inutile de prévoir une pale inclinée. La soudure de la pale sur la paroi intérieure du tonneau en est donc facilitée.

Le chargement et le déchargement de la baratte est en outre facilité puisque de grandes amplitudes de basculement peuvent être obtenues sans difficulté. Le chargement peut s'effectuer avec l'embouchure en position haute et le déchargement avec l'embouchure en position basse, par gravité, sans qu'il soit nécessaire de prévoir d'hélice puisque le déchargement s'effectue par gravité.

Plus particulièrement, la pale peut s'étendre sensiblement dans un plan radial du tonneau, notamment sensiblement sur toute la longueur du tonneau entre son fond et son embouchure. L'absence d'hélice permet, en effet, une augmentation de la longueur de la pale et donc de la zone de malaxage à l'intérieur du tonneau.

Egalement dans un mode de réalisation particulier, le tonneau est monté basculant d'une position embouchure haute pour son chargement à une position embouchure basse pour son déchargement en passant par une position de barattage où l'axe de rotation du tonneau est par exemple sensiblement horizontal et la baratte comprend une porte agencée pour fermer l'embouchure, des moyens de contrôle étant agencés pour bloquer l'ouverture de la porte en toute autre position que la position embouchure haute et pour interdire la rotation du tonneau en mode automatique en toute autre position que la position de barattage.

Un tel agencement présente des avantages sur le plan de la sécurité de fonctionnement. En effet, en cas d'utilisation de la baratte en vue de l'enrobage cryogénique de produits alimentaires, on injecte de l'azote liquide à l'intérieur du tonneau. A la fin du barattage, l'azote est vaporisé et demeure à l'intérieur du tonneau du fait de sa densité même après que le tonneau ait été vidé. Il en résulte un risque important d'asphyxie pour une personne qui pénétrerait dans la baratte, par exemple, à des fins d'inspection.

Au contraire, le déchargement de la baratte selon l'invention s'effectuant avec son embouchure en position basse, l'azote s'en échappe naturellement lors de son déchargement. Il n'y a plus de risque d'asphyxie lorsque la baratte est ramenée en position horizontale.

Plus particulièrement, lesdits moyens de contrôle peuvent être agencés pour empêcher le passage du tonneau en position embouchure basse lorsque la porte est fermée.

Ainsi, la baratte n'est amenée en position basse que pour son déchargement de sorte que les risques qu'une personne se trouve sous la baratte à cet instant sont fortement limités.

Les moyens de contrôle peuvent bien entendu être constitués par des dispositifs mécaniques mais sont de préférence des moyens informatiques assurant le cycle de fonctionnement général de la baratte.

Egalement dans un mode de réalisation particulier, la baratte selon l'invention comprend un berceau basculant de support du tonneau, généralement en forme de U, monté à rotation autour dudit axe de basculement et des vérins de basculement, chaque vérin ayant sa tige coulissante montée sur une branche latérale du U et son fût situé du côté de la tige montée sur un bâti fixe de support.

On obtient ainsi un agencement particulièrement compact dans lequel le débattement des vérins est limité.

Le tonneau peut être monté à rotation sur le berceau par un axe de rotation de fond fixé à la branche centrale du U et par au moins un galet de support et d'entraînement monté tournant par rapport au berceau et agencé pour coopérer avec un chemin de roulement prévu sur le tonneau.

L'entraînement en rotation du tonneau peut également être assuré par un moteur unique fixé sur la branche centrale du U et coaxial au tonneau.

L'axe de pivotement de la potence peut être sensiblement vertical lorsque la baratte est dans une position d'ouverture de porte et de verrouillage du pivotement de la potence.

Comme on l'a vu ci-dessus, cette position d'ouverture de porte est celle où la baratte se trouve en position embouchure haute.

Egalement dans un mode de réalisation particulier, la baratte selon l'invention comprend une pale longitudinale en saillie de la paroi interne de la baratte, ladite pale ayant son bord libre formant un premier caisson, caractérisé par le fait que la pale est reliée à la paroi de la baratte le long de son bord opposé à son bord libre par l'intermédiaire d'un deuxième caisson dont les parois et leurs raccordements à la paroi de la baratte et à la pale sont généralement dépourvus d'arêtes.

Bien évidemment, un tel agencement peut être réalisé indépendamment des dispositions précédemment décrites.

La pale est donc reliée à la paroi interne de la baratte par des surfaces courbes continues dont le nettoyage est beaucoup plus aisé que celui d'un dièdre rentrant.

Dans un mode de réalisation particulier, ledit deuxième caisson comprend deux parois de caisson généralement cylindriques et tangentes chacune le long de deux de leurs génératrices, d'une part à la paroi de la baratte, et d'autre part à la pale.

Plus particulièrement, lesdites parois de caisson peuvent être généralement tangentes entre elles le long de leur génératrice de tangence à la pale.

Egalement dans un mode de réalisation particulier, lesdits premier et deuxième caissons ont leur cavité communiquant entre elles.

Plus particulièrement, une telle baratte peut comporter une partie tronconique se terminant par une embouchure, la largeur de la pale étant au plus égale à la différence de rayon entre le tonneau et l'embouchure et allant en diminuant en direction de l'embouchure, lesdites deux cavités se rejoignant à l'extrémité de la pale où le premier caisson rejoint la surface interne de la partie tronconique.

Un autre inconvénient des caissons de pale de baratte est que les soudures qui les délimitent risquent de s'altérer avec le temps. Des micro-fissures peuvent ainsi se produire susceptibles de livrer le passage à des micro-organismes. Ces derniers, se trouvant alors dans le caisson, ne peuvent plus être éliminés.

Il est prévu que la cavité d'au moins un caisson communique avec l'extérieur par l'intermédiaire d'une valve par laquelle il est possible de mettre en surpression le caisson respectif.

Ainsi, tout écoulement entre le caisson et la baratte se fera vers la baratte de sorte qu'aucun micro-organisme ne pourra pénétrer dans le caisson.

La mise en surpression pourra être effectuée soit à intervalle régulier, soit lorsque l'on constate que la pression est descendue en dessous d'un seuil prédéterminé. Dans ce cas, et si la chute de pression est relativement rapide, il pourra être nécessaire de contrôler l'état des soudures.

Afin d'effectuer ces vérifications de pression, on peut prévoir des moyens de connexion à un manomètre de mesure de la pression dans au moins un des caissons munis d'une valve.

Dans le cas où la baratte possède au moins une autre cavité fermée, celle-ci peut être reliée à celle d'au moins un des caissons de manière qu'elle bénéficie des mêmes avantages.

On décrira maintenant à titre d'exemples non limitatifs un mode de réalisation particulier de l'invention en référence aux dessins schématiques annexés dans lesquels :
- la figure 1 est une vue en perspective de la baratte en position porte ouverte et embouchure haute ;
- la figure 2 est une vue de côté de la baratte en position porte ouverte et embouchure haute ;
- la figure 3 est une vue de côté de la baratte en position porte fermée et embouchure haute ;
- la figure 4 est une vue de côté de la baratte en position porte fermée et tonneau dans une position de barattage intermédiaire entre les positions embouchure haute et embouchure basse ;
- la figure 5 est une vue de côté de la baratte en position porte ouverte et embouchure basse ;

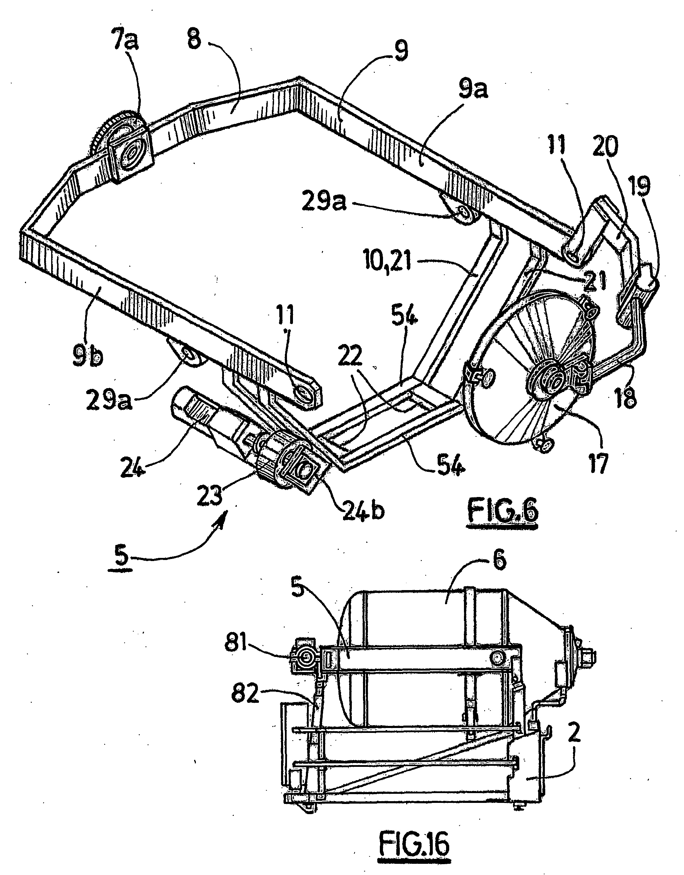

- la figure 6 est une vue en perspective du berceau supportant le tonneau rotatif de la baratte ;
- la figure 7 est une vue en perspective de la potence sur laquelle la porte du tonneau est montée ;
- la figure 8 est une vue en perspective du bras supportant l'axe de pivotement de la potence ;
- les figures 9A, 9B et 9C sont des vues respectivement de face, de face agrandie et de côté d'organes de soulèvement du tonneau par rapport au berceau ;
- la figure 10 est une vue de côté de la baratte comportant un système de maintien automatique du bras en position haute, lorsque la porte est ouverte ;
- la figure 11 est une vue de côté de la baratte selon la figure 10 en position de barattage ;
- la figure 12 est vue de côté de la baratte avec portillon et barrière de protection ; et
- les figures 13A et 13B sont des vues de côté de la baratte montrant la face intérieure de la porte du tonneau, ainsi qu'une béquille de maintien du tonneau en position basse de déchargement et de lavage ;
- la figure 14 est une vue schématique d'une baratte selon l'invention en coupe longitudinale ;
- la figure 15 est une vue en coupe transversale d'une pale fixée sur un tonneau de baratte selon l'invention ;
- la figure 16 est une vue de côté d'une baratte selon un mode de réalisation de l'invention.

Aux figures, la baratte 1 comporte un bâti 2 métallique comportant deux montants verticaux 3, 4 sur l'extrémité desquels est monté basculant horizontalement un berceau 5. Un tonneau 6 de traitement de produits est monté tournant sur lui-même autour d'un axe 7 longitudinal par rapport au berceau 5.

Le berceau 5 comprend une fourche 9 de forme générale en U, comportant une partie centrale 8 raccordée à deux branches 9a, 9b coplanaires. L'axe 11 de basculement du berceau 5 par rapport au bâti 2 se trouve près des extrémités libres des branches 9a, 9b. Tandis que l'axe de rotation 7 se trouve sensiblement au milieu de la partie centrale 8 du berceau 5.

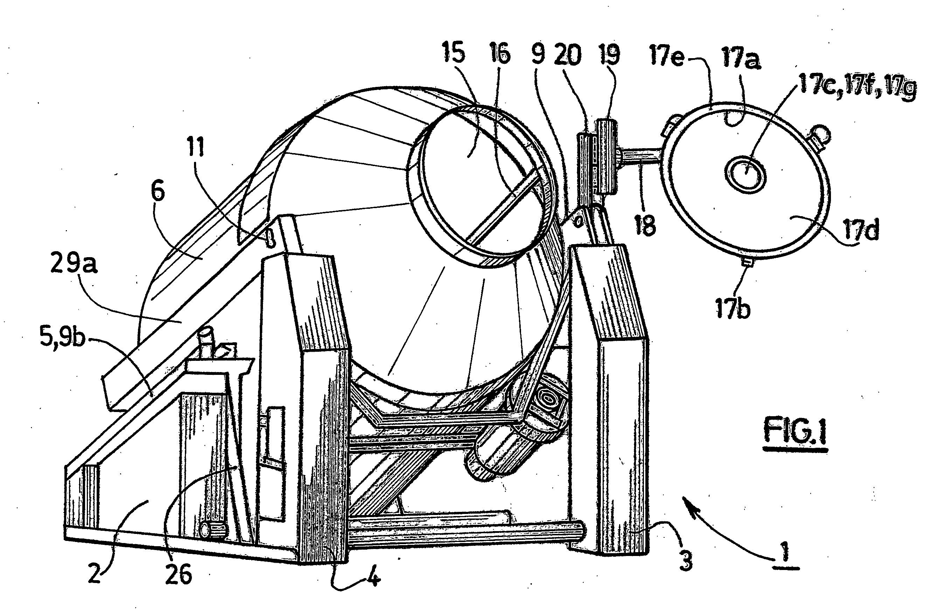

Le tonneau 6 comporte une paroi cylindrique circulaire 12 raccordée d'un côté à un fond 13 arrondi vers l'extérieur et de l'autre côté à une paroi tronconique 14 terminée par une embouchure 15 de section inférieure à celle délimitée par la paroi cylindrique 12. Un palier 7a est prévu entre le fond 13 et la partie centrale 8 de la fourche 9, pour permettre la rotation du tonneau 6 autour de l'axe de rotation 7 du palier 7a. Une pale 16 de malaxage, visible à la figure 1, est prévue à l'intérieur du tonneau 6, fixée à la paroi cylindrique 12 et à la paroi tronconique 14. La pale 16 s'étend du fond 13 à l'embouchure 15, dans un plan radial, passant par l'axe 7 de rotation du tonneau 6.

Une porte circulaire 17 apte à fermer l'embouchure 15 est fixée à l'extrémité d'une potence 18 dont l'autre extrémité comporte un axe de pivotement 19 par rapport à l'extrémité d'un bras 20 lui-même monté basculant par une autre extrémité par rapport à l'axe 11 de basculement. L'axe 11 de basculement se trouve à proximité de l'embouchure 15, par exemple, comme représenté, en vis-à-vis de la paroi tronconique 14 du tonneau 6, qui occupe une partie mineure de la longueur du tonneau 6 du fond 13 à l'embouchure 15. Dans l'exemple représenté, l'axe 11 de basculement se trouve plus près de la zone de raccordement de la paroi 14 tronconique à la paroi 12 cylindrique du tonneau 2 que de l'embouchure 15. Dans d'autres réalisations non représentées, l'axe 11 de basculement se trouve plus près de l'embouchure15 que de la zone de raccordement de la paroi 14 tronconique à la paroi 12 cylindrique du tonneau 2. La longueur et la forme de la partie tronconique 14 et l'angle d'inclinaison du tonneau 6 en position de déchargement sont tels qu'ils permettent un déchargement des produits contenus dans le tonneau 6 à distance du bâti 2, sous l'embouchure 15.

Un système de fermeture est prévu sur la porte 17 et l'embouchure 15 pour la maintenir fermée de manière étanche sur l'embouchure 15 et solidaire du tonneau 6 et pour désolidariser la porte 17 de l'embouchure 15. Ce système de fermeture comprend par exemple sur la paroi 17d de la porte 17, des crochets 17b de fermeture coopérant avec un rebord circulaire 15b correspondant de l'embouchure 15, les crochets pouvant être actionnés par des manettes, une entrée 17c de mise en dépression du tonneau 6, prévue au centre de la porte 17 et entourée par un joint tournant 17a par rapport à la paroi 17d, et un flasque 17e d'étanchéité périphérique sur la paroi 17d coopérant avec l'embouchure 15.

Les branches 9a, 9b de la fourche 9 sont reliées entre elles par et solidaires d'une entretoise 10 de berceau, située sous la paroi cylindrique 12 du tonneau et comportant, dans l'exemple représenté, deux barres 21 parallèles coudées chacune en trois segments rectilignes et reliées entre elles par deux traverses 22 fixées près des coudes, les segments centraux étant en partie basse. Deux galets 23 de support et d'entraînement en rotation du tonneau 6 sont prévus dans l'espace situé entre les segments latéraux des barres 21, à proximité des coudes. Les galets 23 sont entraînés en rotation par des moteurs 24 montés sur l'entretoise 10, par exemple sur des plaques 24b soudées aux barres 21. Les galets 23 ont leur périphérie circulaire en contact avec un chemin 25 de roulement solidaire de la paroi cylindrique 12 du tonneau 6, à proximité de la paroi 14. Des organes commandables sont prévus pour bloquer en rotation le tonneau 6. Par exemple, les galets 23 sont immobilisés en rotation par des freins prévus sur les moteurs 24, les galets 23 et le chemin 25 étant tels que le tonneau 6 est immobilisé en rotation par friction de leurs surfaces.

Bien entendu, l'entretoise peut également comporter des pièces de support de galet autres que des segments ou barres et un nombre de galets plus grand ou plus petit que deux.

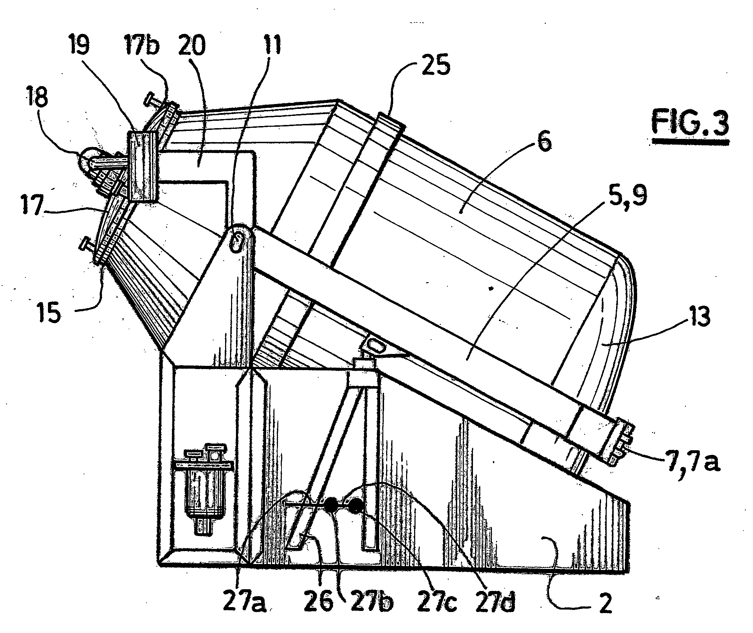

Deux vérins 26 de basculement du tonneau 6 autour de l'axe 11 sont prévus de part et d'autre du tonneau 6, montés tournants par leur fût 27 sur le bâti 2, autour d'un axe de rotation 28 parallèle à l'axe de basculement 11. Les tiges mobiles 29 des vérins ont leur extrémité libre reliée tournante autour d'axes 29a aux branches respectives 9a, 9b de la fourche 9, à distance de l'axe de basculement 11, par exemple à proximité de leur milieu. L'axe 28 de rotation des vérins 25, 26 est par exemple situé en haut du fût 27 à proximité de l'ouverture du fût 27, prévue pour le passage de la tige 29. Des capteurs de position de l'un et/ou de l'autre des deux vérins 26 sont prévus. Aux figures 3 à 5, ce sont des capteurs de la position angulaire du fût 27, disposés sur le bâti 2 à distance de l'axe 28 d'articulation et en regard du fût 27. Pour un vérin 26 ayant trois positions angulaires différentes dans les positions embouchure haute, embouchure basse et en position de barattage, trois capteurs 27a, 27b et 27c, par exemple inductifs, sont disposés en face du fût 27 dans ces trois positions angulaires, sur une tringle 27d fixée au bâti. Des moyens de contrôle des vérins pouvant agir en fonction des données fournies par les capteurs sont prévus.

En variante, un nombre autre que deux de vérins peut être prévu de part et d'autre du tonneau ou un unique vérin ou plusieurs vérins peuvent être prévus sous la partie centrale du berceau.

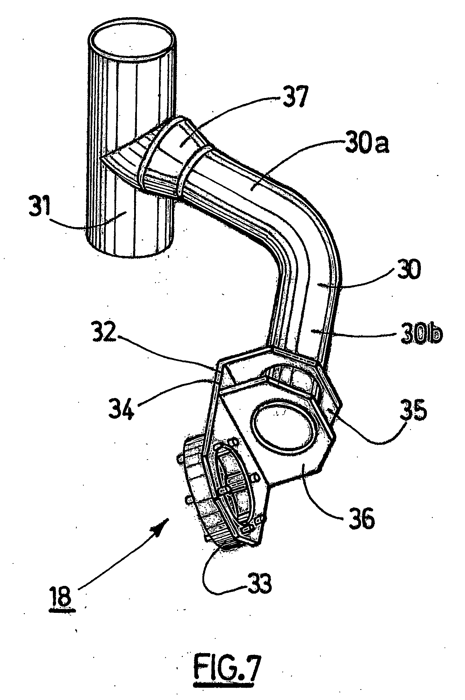

A la figure 7, la potence 18 comporte un tube 30, par exemple de section circulaire, coudé en deux parties 30a, 30b, par exemple d'un angle de l'ordre de 130°. Le tube 30 est fixé, par soudage ou autres, par sa partie 30a à un tourillon 31 et par sa partie 30b à un organe 32 de support de la porte 17. La porte 17 comporte en son centre le joint tournant 17a monté tournant autour de l'axe 7 de rotation du tonneau 6 dans l'organe 32 de support. A cet effet, l'organe 32 de support comporte une couronne 33 dans laquelle le joint tournant 17a est reçu tournant et une tôle 34 à laquelle la couronne 33 est fixée, par exemple par vissage. La tôle 34 présente une partie 35 coudée à angle droit, traversée par la partie 30b du tube 30 et soudée à celle-ci. Une tôle de renfort 36 peut également être soudée à l'extrémité du tube 30 et à la tôle 34 ainsi qu'une pièce 37 de renfort à la liaison entre le tourillon 31 et la partie 30a. Une conduite de mise en dépression du tonneau débouchant à l'entrée 17c de mise en dépression de la porte 17, ainsi que des circuits de capteurs 17f et 17g de pression et de température de l'intérieur du tonneau 6, prévus au centre de la porte 17, passent dans le tube 30 et le tourillon 31 de la potence 18. La conduite de mise en dépression est reliée à l'embout 2a prévu sur le bâti 2 et relié à une centrale commandable de mise en dépression.

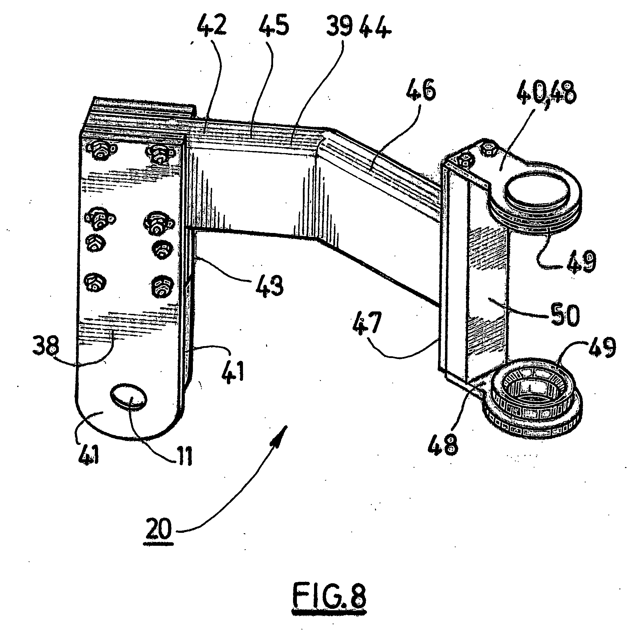

A la figure 8, le bras 20 comporte un membre 38 de liaison à l'axe 11 de basculement et un membre 39 de support d'un palier 40 prévu pour recevoir et permettre le pivotement du tourillon 31 de la potence 18, formant l'axe 19 de pivotement. Dans des réalisations non représentées, le palier est prévu sur la potence et le tube formant l'axe de pivotement est prévu sur le bras. Dans l'exemple représenté, le membre de liaison 38 comporte deux plaques 41 face à face, entre lesquelles est vissée une partie extrême 42 du membre 39 de support, ainsi qu'une entretoise 43. Le membre 39 de support comporte un tube 44 coudé en deux parties 45, 46, la partie 45 se terminant par la partie extrême 42 et la partie 46 se terminant par une platine 47 sur laquelle est fixée le palier 40, par exemple par vissage. Le palier 40 comprend deux joues 48 face à face, espacées de plus de la longueur du tourillon 31 et sur chacune desquelles est fixé un coussinet 49 pour le pivotement du tourillon 31. Les joues 48 sont fixées, par exemple vissées, en haut et en bas d'un barreau 50 de fixation à la platine 47.

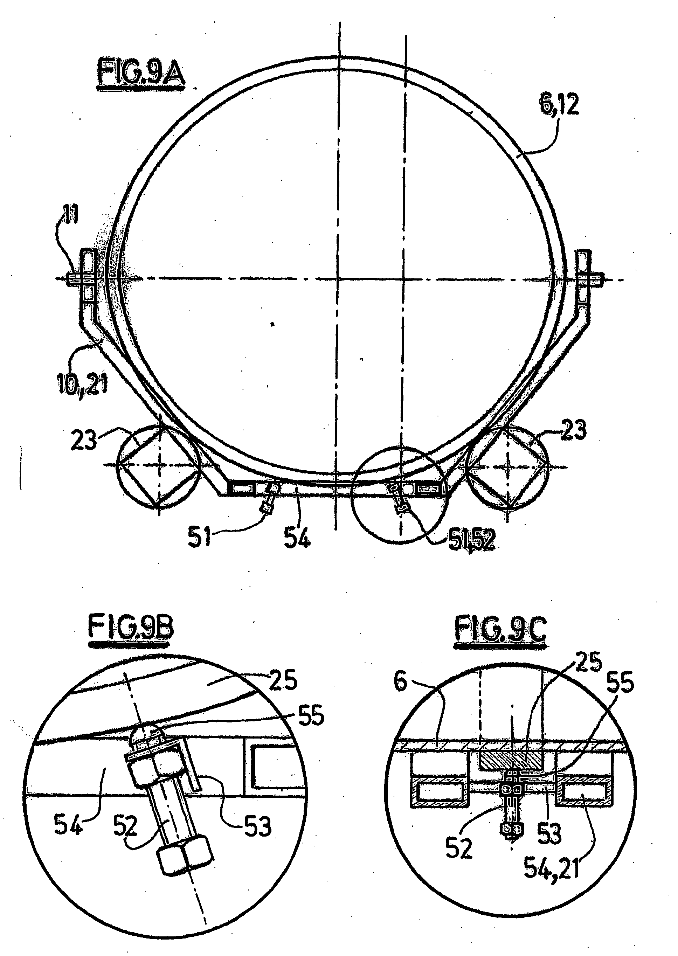

Aux figures 9A, 9B et 9C, des organes 51 de soulèvement du tonneau 6 ont prévus sur l'entretoise 10. Ces organes 51 de soulèvement comprennent par exemple deux vis 52 insérées dans des cornières 53 fixées entre les segments inférieurs 54 des barres 21 et tournant dans des écrous fixés aux cornières 53. Les queues 55 des vis 52 sont tournées vers le chemin de roulement 25 du tonneau 6, tandis que les têtes des vis 52 sont tournées et accessibles vers le bas. Les organes de soulèvement 51 sont utilisés pour soulever le tonneau 6 par rapport au berceau 5, lorsque le tonneau 6 est bloqué en rotation, pour par exemple des opérations de maintenance telles que le changement des galets 23. Pour ce faire, on fait tourner les vis 52 de manière à les translater vers le tonneau 6. Les organes 51 peuvent également servir à bloquer en rotation le tonneau 6, lorsque le tonneau est soulevé.

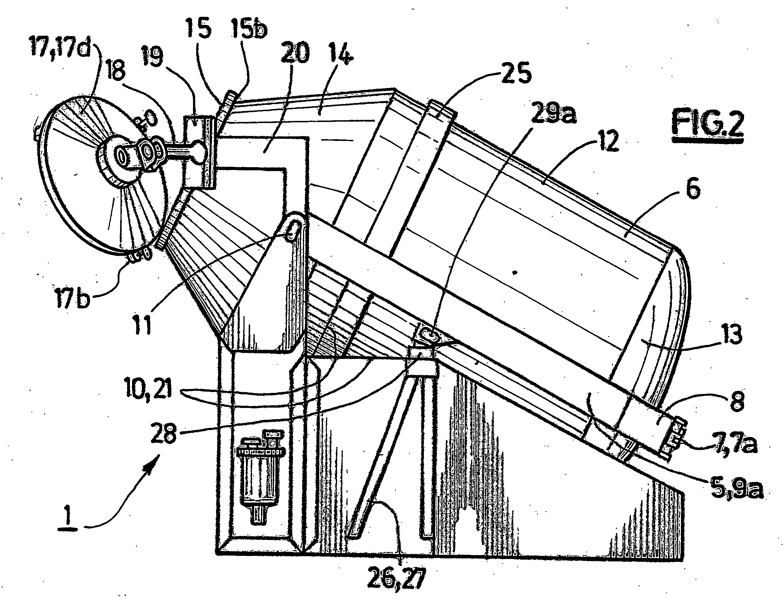

Un système 56 de maintien du bras 20 en position embouchure haute, porte ouverte est prévu. Le système 56 de maintien est tel que dans cette position de maintien, l'axe 19 de pivotement de la potence 18 par rapport au bras 20 est sensiblement vertical, afin de permettre une ouverture et une fermeture aisée de la porte. L'axe de pivotement 19 est tel qu'en position écartée de la potence 18 par rapport à l'embouchure 15, d'un angle de pivotement de plus de 90°, représentée aux figures 1, 2, 5, 10, 13A, 13B, la potence 18 ne revient pas d'elle-même vers l'embouchure 15. Ce maintien en position écartée est provoqué par exemple par frottement entre la potence 18 et le bras 20, par exemple des coussinets 49 avec le tourillon 31.

Dans les réalisations des figures 1 à 5, le système 56 de maintien comprend un verrou du bras 20, formé par exemple par une goupille coulissant dans un trou du membre 38 de liaison et dans des trous ménagés dans le montant 3 du bâti 2, à distance de l'axe 11 de basculement, la goupille passant dans ces trous du bras et du bâti en position embouchure haute, porte ouverte. Lorsque la porte est fermée en position embouchure haute, on fait coulisser la goupille pour la faire sortir des trous du bras et/ou du trou du bâti, afin de permettre le basculement du bras 20 autour de l'axe 11 de basculement.

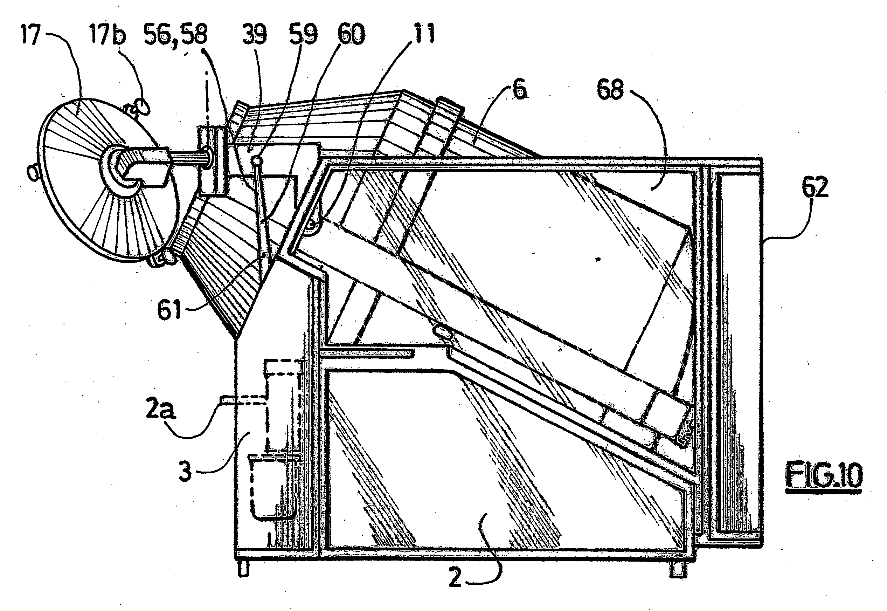

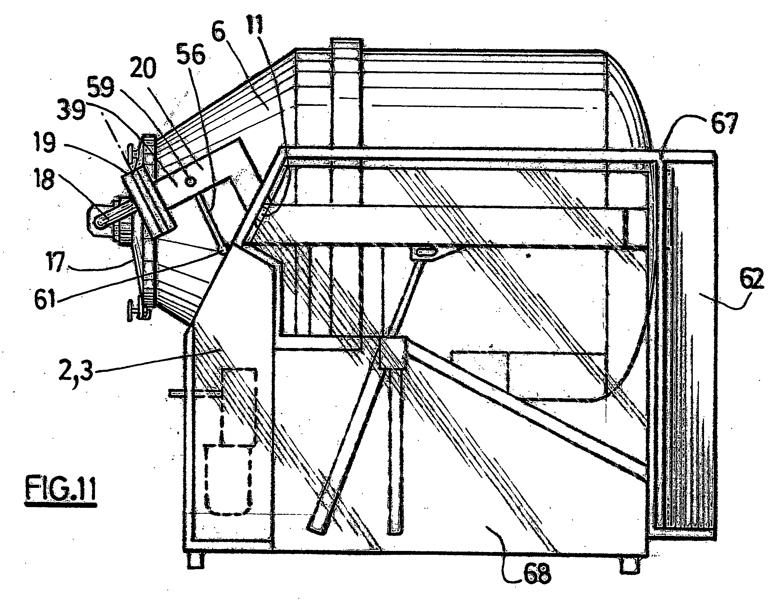

Dans la réalisation des figures 10, 11, le système 56 de maintien en position embouchure haute, porte ouverte comprend un vérin 57 compensateur, par exemple pneumatique, monté par ses extrémités entre le bras 20 et le bâti 2. Le vérin 57 compensateur comprend une tige coulissante 58 montée à rotation par son extrémité extérieure autour d'un axe horizontal 59 sur le membre 39 de support du bras, par exemple sur sa partie 47 prés du coude, et un fût 60 de coulissement de la tige 58, monté à rotation par son extrémité inférieure autour d'un axe horizontal 61 sur le montant 3. Le vérin 57 est agencé pour maintenir automatiquement le bras 20 en position embouchure haute lorsque la porte 17 est désolidarisée du tonneau 2 et est apte à supporter le poids du bras 20, de la potence 18 et de la porte 17. Lorsque la porte est solidarisée avec le tonneau 6, la force exercée par le vérin compensateur 57 sur le bras 20 est inférieure à la force exercée par le tonneau 6 sur le bras 20 lors du basculement du tonneau 6, de manière à ce que la tige 58 coulisse dans le fût 60. La course maximale de rentrée de la tige 58 dans le fût 60 est prévue en position de barattage.

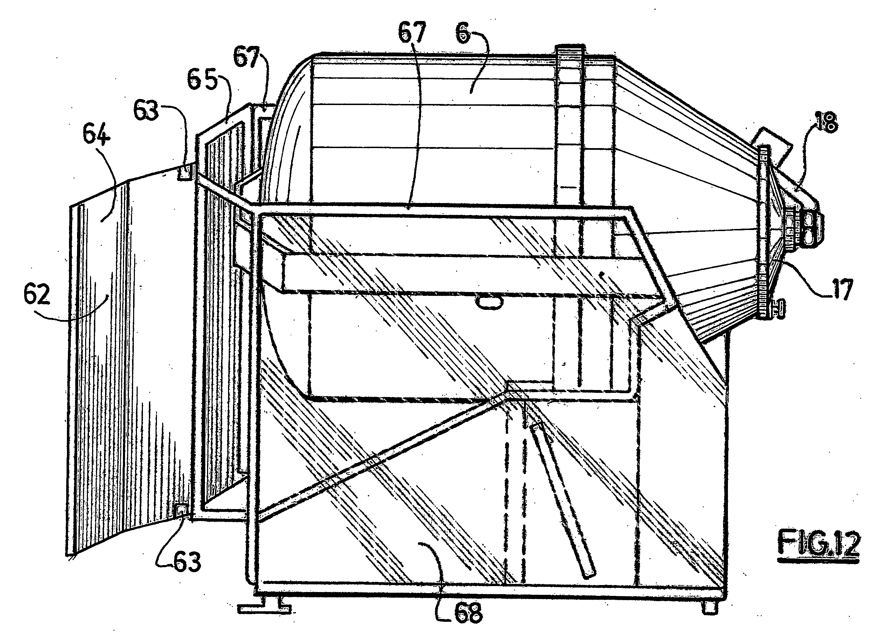

Aux figures 10, 11, 12, 13A et 13B, le bâti 2 comporte un portillon arrière 62 face au fond 13 du tonneau 6, à un ou plusieurs battants. Le portillon 62 comporte une ou plusieurs serrures, dans l'exemple représenté une serrure 63 en haut et en bas du battant mobile 64, destinées au verrouillage en position fermée des battants par rapport à un cadre 65 solidaire du bâti 2. En variante, la ou les serrures sont prévues entre deux battants mobiles. Les serrures sont destinées à ne permettre l'accès à l'arrière de la baratte qu'à du personnel de maintenance. Il est prévu des moyens de contrôle agencés pour interdire tout fonctionnement de la baratte 1 lorsque le portillon 62 est ouvert. Une béquille 66 articulée à rotation sur le bâti 2 est prévue de part et d'autre du berceau 5 pour s'encliqueter par son extrémité libre sur le berceau 5 en position fond relevé, embouchure basse du tonneau 6, afin de l'y maintenir pour des travaux de maintenance. La béquille 66 s'encliquette par exemple sur l'axe 29a de rotation des vérins 26 par rapport à la fourche 9. Des barrières 67 de protection sont prévues sur le bâti 2 de part et d'autre du tonneau 6. Aux figures 10 et 11, un grillage de protection 68 ou un mur 68 en matière plastique transparent est monté sur le bâti 2, de part et d'autre du tonneau 6.

Les opérations de barattage sont effectués de la manière décrite ci-dessous.

Pour mettre des produits dans le tonneau 6, on commande le bloquage en rotation du tonneau 6. On commande les vérins 25, 26 pour positionner le berceau 5 dans une position inclinée vers le bas, du côté de sa partie centrale 8, de manière que l'embouchure 15 du tonneau 6 soit en position haute. On actionne le cas échéant le verrou pour maintenir le bras 20 en position haute. On commande le système de fermeture pour désolidariser la porte 17 de l'embouchure 15 et on fait pivoter la potence 18 autour de son axe 19 jusqu'à une position écartée, pour ouvrir la porte 17, ainsi que représenté aux figures 1, 2, 10 et 13A. Dans cette position, l'axe de pivotement 19 est sensiblement vertical.
Après introduction des produits dans le tonneau 6 par son embouchure 15, on fait pivoter la potence 18 autour de son axe 19 jusqu'à ce que la porte soit sur l'embouchure 15. Puis on commande le système de fermeture pour fermer la porte 17 sur l'embouchure 16 et on déverrouille ensuite le cas échéant le verrou du bras 20. Pendant ces opérations, les vérins 26 sont commandés pour que le tonneau 6 demeure en position embouchure haute, ainsi que représenté à la figure 3, et on commande le bloquage en rotation du tonneau 6.

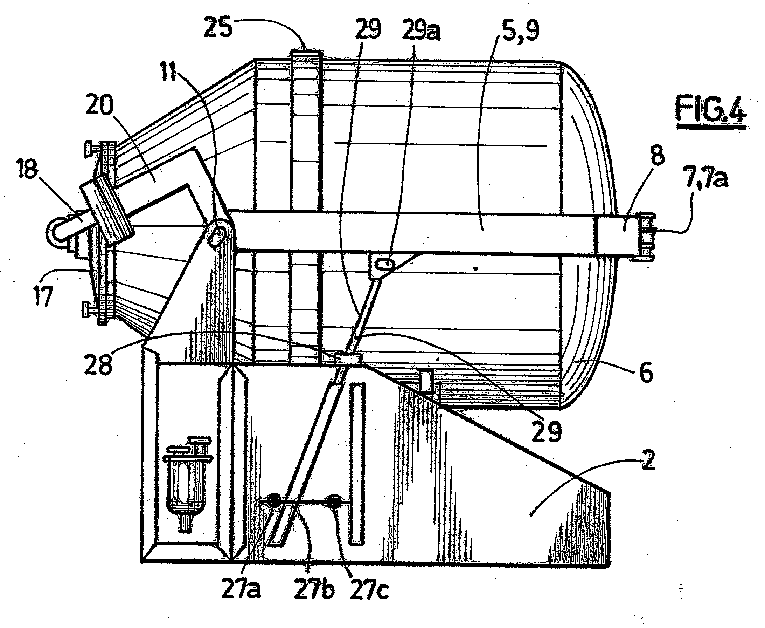

On commande ensuite les vérins 26 pour faire basculer le berceau 5 autour de l'axe 11 dans la position de barattage représentée aux figures 4, 11 et 12. Puis on commande les moteurs 24 pour faire tourner les galets 23 dans le même sens sur le chemin 25, de manière à faire tourner le tonneau 6 autour de son axe 7 et provoquer le malaxage ou autres des produits présents dans le tonneau 6. Pendant ces opérations, la porte 17 est maintenue fermée sur et solidarisée sur l'embouchure, des moyens de contrôle du système de fermeture de la porte étant prévus pour interdire toute ouverture de ceux-ci. La porte 17, la potence 18 et le bras 20 basculent autour de l'axe 11 solidairement avec le tonneau 6 et le berceau 5. L'axe de rotation 7 du tonneau 6 est par exemple à l'horizontale.

Pour vider le tonneau 6, on arrête les moteurs 24 et on bloque la rotation du tonneau 6, les vérins étant commandés pour maintenir le tonneau en position de barattage et le système de fermeture étant commandé pour maintenir la porte 17 fermée. On commande ensuite les vérins 26 pour faire basculer le berceau 5 en position embouchure haute du tonneau 6, on actionne le cas échéant le verrou pour maintenir le bras 20 en position haute, puis on commande le système de fermeture pour ouvrir la porte 17, les moyens de contrôle n'autorisant l'ouverture de celui-ci que lorsque le tonneau se trouve en position embouchure haute. Les moyens de contrôle sont agencés pour empêcher les vérins de faire basculer le tonneau 6 en position embouchure basse lorsque la porte 17 est fermée et à n'autoriser ce basculement en position embouchure basse que lorsque la porte 17 est en position écartée verrouillée, cet état étant reconnu par exemple automatiquement grâce aux capteurs de température et/ou de pression de la porte 17. On écarte la potence 18 de l'embouchure 15, comme représenté aux figures 1, 2, 10 et 13A, ce qui permet d'évacuer des gaz de réaction, éventuellement nocifs, du tonneau 6.

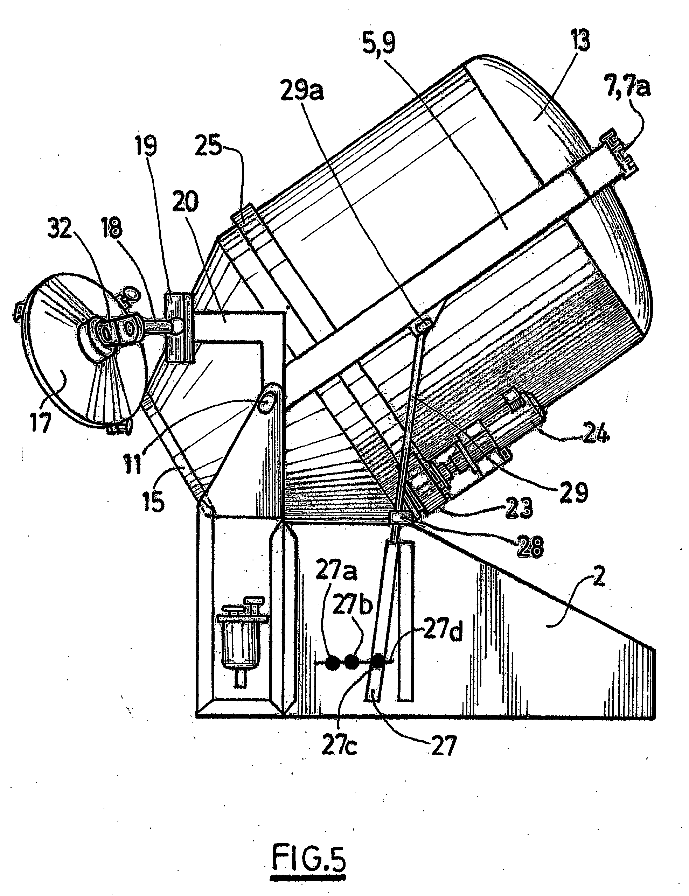

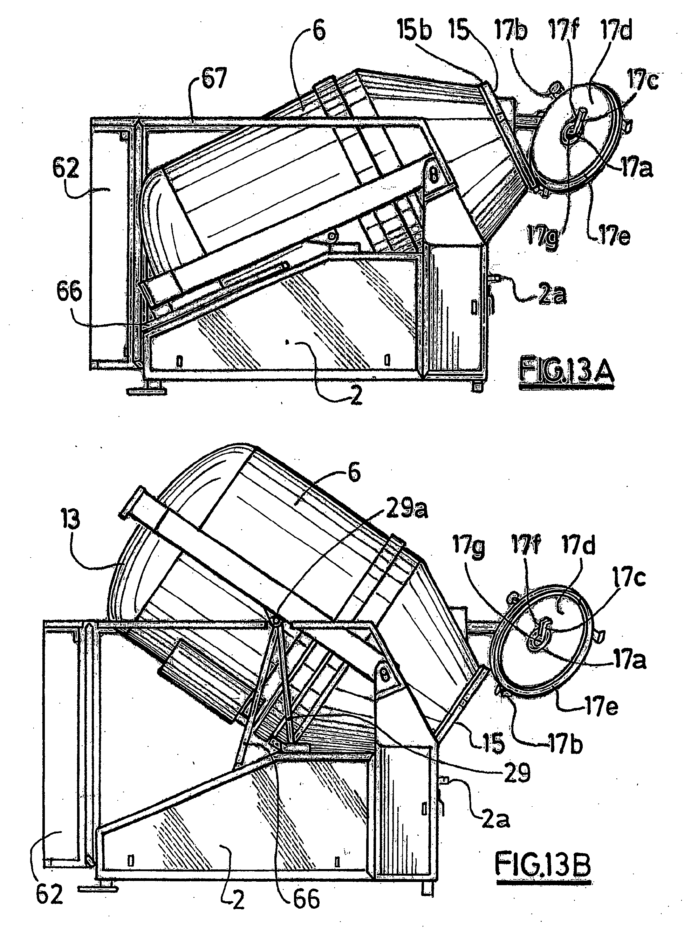

Enfin, on commande les vérins 26 pour faire basculer le berceau 5 et le tonneau 6 par rapport à l'axe 11 jusqu'à la position représentée aux figures 5 et 13B, dans laquelle l'axe de rotation 7 et le tonneau 6 sont inclinés vers le bas, du côté de l'embouchure 15. Pendant ce basculement, la porte est maintenue écartée de l'embouchure 15, le bras 20 bloqué en rotation dans la position, qu'il a prise embouchure haute et le tonneau 6 est bloqué en rotation. La position écartée de la porte 17, de la potence 18 et du bras 20 est telle qu'elles ne se trouvent pas dans le prolongement de l'embouchure 15, de manière à ne pas se trouver dans le trajet de déchargement des produits du tonneau 6.

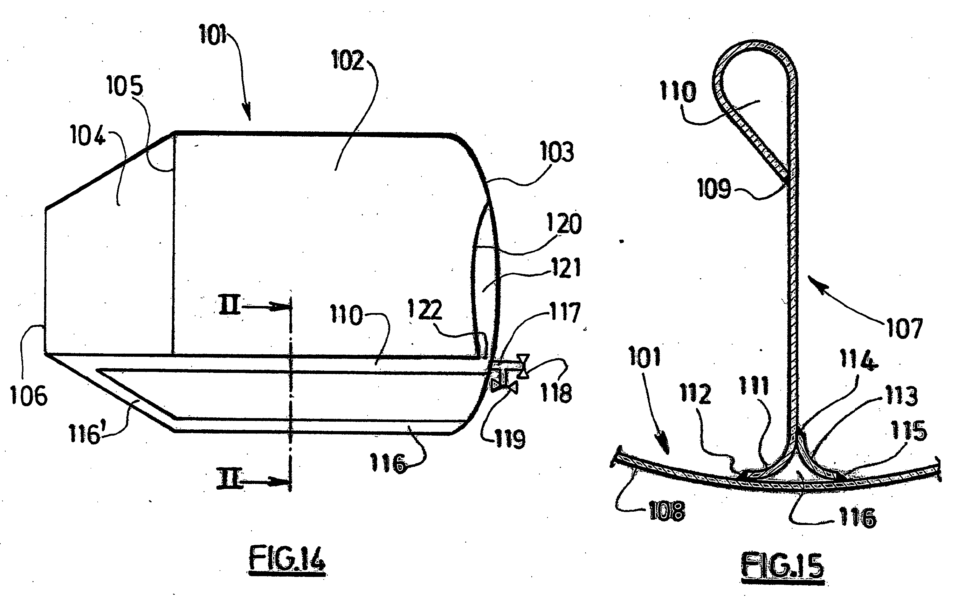

A la figure 14, seul le tonneau de la baratte a été représenté. En particulier, n'ont pas été représentés les moyens de montage et les moyens d'entraînement en rotation autour de son axe, de la baratte.

Le tonneau 101 présente une partie centrale sensiblement cylindrique 102 avec à une de ses extrémités un fond 103 généralement sphérique et à son autre extrémité une partie 104 tronconique dont la grande base 105 est soudée à l'extrémité adjacente de la partie cylindrique 105 et dont la petite base 106 forme une embouchure de remplissage et de vidange susceptible d'être fermée par une porte (non représentée).

Une pale 107 est montée à l'intérieur de la baratte en saillie de la paroi 108 de cette dernière dans un plan sensiblement radial.

La pale 107 est réalisée sous la forme d'une tôle plane allongée dans le sens longitudinal de la baratte et s'étendant sensiblement depuis le fond 103 jusqu'à l'embouchure 106.

Le bord supérieur de cette tôle est replié et soudé sur lui-même le long d'une ligne de soudure 109 pour former un caisson tubulaire 110.

Le bord de la pale 107 opposé au caisson 110 est lui-même replié suivant un quart de cylindre, formant une paroi de caisson 111. Le bord libre de cette paroi de caisson 111 est soudée en 112 à la paroi 108 de la baratte.

Une autre paroi de caisson 113, également sensiblement en quart de cylindre, est soudée d'une part en 114 au bas de la pale 107 et d'autre part en 115 à la paroi 108 de la baratte. Les deux parois de caissons 111 et 113 sont tangentes le long de la ligne de jonction avec la partie plane de la pale 107.

Les deux parois de caisson 111 et 113 présentent leurs concavités tournées vers l'intérieur de la baratte. Elle forment avec une partie de la paroi 108 de la baratte un deuxième caisson 116, également tubulaire et généralement parallèle au caisson 110.

Le caisson 116 se poursuit en 116' au niveau de la partie tronconique 104 et il rejoint le caisson 110 à l'extrémité de la pale au niveau de l'embouchure 106.

A leur jonction, les caissons 116 et 110 communiquent pour former une cavité commune.

Un conduit 117 monté sur le fond 103 de la baratte, met en communication l'intérieur des caissons 110 et 116 avec l'extérieur.

Une vanne 118 est montée sur le conduit 117 pour mettre les caissons en surpression et une autre vanne 119 est également montée sur le conduit 117 pour la connexion à un manomètre.

On voit en outre à la figure 14 que la baratte est munie d'un double fond 120 délimitant avec le fond 103 une cavité fermée 121. Cette cavité 121 est mise en communication avec le caisson 110 par un orifice 122.

Ainsi, les caissons et toute autre cavité fermée qui leur est reliée peuvent être en permanence en surpression de manière à éviter toute fuite de l'intérieur de la baratte vers l'intérieur des caissons, et cette pression peut être régulièrement vérifiée pour tester l'état des soudures des caissons.

A la figure 16 est représentée une baratte selon un mode de réalisation particulier de l'invention.

Le tonneau 6 étant monté à rotation sur un berceau 5 basculant par rapport au bâti 2, l'entraînement en rotation dudit tonneau est réalisé au moyen d'un moteur unique 81 disposé sur l'arrière de la baratte. Ce moteur est rigidement fixé à la branche centrale du U 5 et son axe d'entraînement relié au tonneau 6 est coaxial à l'axe de rotation dudit tonneau 6.

Le basculement du tonneau 6 est d'autre part assuré par un vérin unique 82 relié à l'une de ses extrémités par une liaison pivot au bâti 2 et à l'autre de ses extrémités par une liaison pivot à la branche centrale du U 5.

## Revendications

1. Baratte (1) pour le traitement de produits alimentaires tels que des viandes ou des poissons, comprenant un tonneau (6) doté d'une embouchure (15), monté à rotation autour de son axe (7) et monté basculant autour d'un axe (11) de basculement sensiblement perpendiculaire à l'axe (7) de rotation et sensiblement dans un même plan, et comprenant une porte (17) de fermeture de l'embouchure (15) du tonneau (6), **caractérisé par le fait que** la porte (17) est montée tournante sur une potence (18) pivotant autour d'un axe (19) de pivotement, ledit axe (19) de pivotement étant prévu sur un bras (20) monté basculant par rapport audit axe (11) de basculement.

2. Baratte (1) selon la revendication 1, comprenant un système (56) apte à bloquer le basculement du bras (20) par rapport à l'axe (11) de basculement, lorsque la porte (17) est ouverte.

3. Baratte (1) selon la revendication 1 ou 2, dans laquelle l'axe (19) de pivotement de la potence (18) est sensiblement vertical lorsque la baratte (1) est dans une position d'ouverture de porte (17) et de verrouillage du basculement du bras (20).

4. Baratte (1) selon l'une quelconque des revendications 2 et 3, dans laquelle le système (56) comporte un vérin compensateur (61) entre le bras (20) et un bâti (2) fixe de support.

5. Baratte (1) selon l'une quelconque des revendications 2 et 3, dans laquelle le système (56) comporte un verrou de bloquage entre le bras (20) et un bâti (2) fixe de support.

6. Baratte (1) selon l'une quelconque des revendications 1 à 5, dans laquelle le bras (20) comporte un membre (38) de liaison à l'axe (11) de basculement et un membre (39) de support de l'axe de pivotement (19), le membre (38) de liaison étant sensiblement à angle droit avec le membre (39) de support.

7. Baratte (1) selon l'une quelconque des revendication 1 à 6, dans laquelle l'axe (19) de pivotement est formé par un palier (40) à au moins un coussinet (49) apte à maintenir en position la potence (18) par rapport au bras (20) en position d'ouverture de la porte (17).

8. Baratte (1) selon l'une quelconque des revendications 1 à 7, dans laquelle un joint tournant (17a) est monté tournant sur la paroi (17d) de la porte (17) suivant l'axe (7) de rotation par rapport à une couronne (33) de réception du joint tournant (17a), fixée sur la potence (18).

9. Baratte (1) selon l'une quelconque des revendications 1 à 8, dans laquelle l'axe (11) de basculement est sensiblement dans un même plan que l'axe (7) de rotation et situé à proximité immédiate de l'embouchure (15).

10. Baratte (1) selon l'une quelconque des revendications 1 à 9, comprenant une pale (16) de malaxage s'étendant à l'intérieur du tonneau (6) à partir de la paroi (12, 14) du tonneau (6), ladite pale (16) étant reliée à la paroi (12, 14) du tonneau (6) sensiblement le long d'une génératrice de cette paroi (12, 14).

11. Baratte (1) selon la revendication 10, dans laquelle ladite pale (16) s'étend sensiblement dans un plan radial du tonneau (6).

12. Baratte (1) selon l'une quelconque des revendications 10 et 11, dans laquelle ladite pale (16) s'étend longitudinalement sensiblement sur toute la longueur du tonneau (6) entre son fond (13) et son embouchure (15).

13. Baratte (1) selon l'une quelconque des revendications 1 à 12, dans laquelle le tonneau (6) est monté basculant d'une position embouchure haute pour son chargement à une position embouchure basse pour son déchargement en passant par une position intermédiaire de barattage où l'axe (7) de rotation du tonneau (6) est par exemple sensiblement horizontal, des moyens de contrôle étant agencés pour bloquer l'ouverture de la porte (17) en toute autre position que la position embouchure haute et pour interdire la rotation du tonneau en mode automatique en toute autre position que la position de barattage.

14. Baratte (1) selon la revendication 13, dans laquelle lesdits moyens de contrôle sont agencés pour empêcher le passage du tonneau (6) en position embouchure basse lorsque la porte (17) est fermée.

15. Baratte (1) selon l'une quelconque des revendications 9 à 14, comprenant un berceau (5) basculant de support du tonneau (6), généralement en forme de U, monté à rotation autour dudit axe (11) de basculement et un unique vérin de basculement prévu sous la branche centrale (8) du U.

16. Baratte (1) selon l'une quelconque des revendications 1 à 14, comprenant un berceau (5) basculant de support du tonneau (6), généralement en forme de U, monté à rotation autour dudit axe (11) de basculement et des vérins (26) de basculement, chaque vérin ayant sa tige coulissante (29) montée sur une branche (9a, 9b) latérale du U et son fût (27) situé du côté de la tige (29) monté sur un bâti (2) fixe de support.

17. Baratte (1) selon la revendication 16, dans laquelle le tonneau (6) est monté à rotation sur le berceau (5) par un axe (7) de rotation de fond (13) fixé à la branche centrale (8) du U et par au moins un galet (23) de support et d'entraînement monté tournant par rapport au berceau (5) et agencé pour coopérer avec un chemin (25) de roulement prévu sur le tonneau (6).

18. Baratte (1) selon l'une des revendications 9 à 16, comprenant un moteur unique d'entraînement en rotation du tonneau (6), ledit moteur étant fixé sur la branche centrale (8) du U et coaxial au tonneau (6).

19. Baratte (1) selon l'une quelconque des revendications 16 et 17, comprenant au moins un organe (51) de soulèvement du tonneau (6) par rapport au berceau (5).

20. Baratte (1) selon la revendication 19, dans laquelle les organes (51) de soulèvement comprennent au moins une vis (52) insérée tournante dans le berceau (5) et tournée vers le tonneau (6).

21. Baratte (1) selon l'une quelconque des revendications 1 à 20 , comprenant au moins une béquille (66) escamotable de maintien en position fond levé du tonneau (6) par rapport à un bâti (2).

22. Baratte (1) selon l'une quelconque des revendications précédentes, comprenant un portillon (62) ouvrable et verrouillable derrière le fond (13) du tonneau (6) et des moyens de contrôle agencés pour interdire tout fonctionnement de la baratte lorsque le portillon (62) est ouvert.

23. Baratte (1) selon les revendications 13 et 17, **caractérisé en ce que** les moyens de bloquage en rotation du tonneau sont formés par les galets (23) aptes à être bloqués en rotation par des organes de bloquage tels que des moteurs - freins (24) et coopérant avec le chemin (25) de roulement.

24. Baratte (1) selon l'une quelconque des revendications 13 à 22, **caractérisé en ce que** les moyens de bloquage en rotation du tonneau sont formés par au moins une vis (52) insérée tournante dans le berceau (5) et appliquée sur le tonneau (6).

25. Baratte (1) selon les revendications 5 et 7, comprenant au moins un capteur (27a, 27b, 27c), tel qu'inductif, de position de l'un et/ou de l'autre des vérins (26), dans les positions embouchure haute, embouchure basse et en position de barattage, les moyens de contrôle des vérins étant agencés pour agir en fonction des données fournies par les capteurs.

26. Baratte selon l'une quelconque des revendications précédentes, comprenant un tonneau (101) monté à rotation autour d'un axe et une pale longitudinale (107) en saillie de la paroi interne de la baratte, ladite pale ayant son bord libre formant un premier caisson (110), la pale étant reliée à la paroi de la baratte le long de son bord opposé à son bord libre par l'intermédiaire d'un deuxième caisson (116, 116') dont les parois (111, 113) et leurs raccordements à la paroi de la baratte et à la pale sont généralement dépourvus d'arêtes, **caractérisée en ce qu'**elle comporte une partie tronconique (104) se terminant par une embouchure (106), la largeur de la pale étant au plus égale à la différence de rayon entre le tonneau et l'embouchure et allant en diminuant en direction de l'embouchure, lesdites deux cavités se rejoignant à l'extrémité de la pale où le premier caisson rejoint la surface interne de la partie tronconique.

27. Baratte selon la revendication 26, dans laquelle ledit deuxième caisson comprend deux parois de caisson (111, 113) généralement cylindriques et tangents chacun le long de deux de leurs génératrices, d'une part à la paroi de la baratte et d'autre part à la pale.

28. Baratte selon la revendication 27, dans laquelle les parois de caisson sont généralement tangentes entre elles le long de leurs génératrices de tangence à la pale.

29. Baratte selon l'une quelconque des revendications 26 à 28, dans laquelle la cavité d'au moins un caisson communique avec l'extérieur par l'intermédiaire d'au moins une valve (118) par laquelle il est possible de mettre en surpression le caisson respectif.

30. Baratte selon la revendication 29, comportant des moyens de connexion (119) à un manomètre de mesure de la pression dans au moins un des caissons munis d'une valve.

31. Baratte selon l'une quelconque des revendications 26 à 30, comportant au moins une cavité (121) fermée outre celles des caissons, cette cavité étant reliée à celle d'au moins un des caissons.
